# EUROPEAN PATENT APPLICATION

(11) **EP 4 841 119 A1**
(43) Date of publication of application: **18.11.2026**
(21) Application number: 25175681.3
(22) Date of filing: 12.05.2025
(51) Int. Cl.: F16B 2/18, F16B 5/06, F16B 2/10, H04R 1/08

(54) **A MOUNT FOR A GOOSENECK TUBE FOR A MUSIC INSTRUMENT**

(71) Applicant: DPA Microphones A/S, 2980 Kokkedal (DK)
(72) Inventor: KLINGE, Timo, Kokkedal (DK); SONNENBERG, Federic, Kokkedal (DK)
(74) Representative: Zacco Denmark A/S

(57) **Abstract**

Disclosed is a system and a mount (2) for a gooseneck tube (4), the mount (2) comprising a base (6) configured for being detachably connected to an instrument clip (8); a body (10) integrated with the base (6), wherein the body (10) comprises a notch (12) configured for accommodating/receiving the gooseneck tube; and a cam lever (14) connected to the body (10); wherein the cam lever is configured to move between an open position (16) and a closed position (18), wherein in the open position, the mount allows for insertion and/or retraction of the gooseneck tube in the notch of the body (10), and wherein in the closed position, the mount prevents insertion and/or retraction of the gooseneck tube in the notch of the body.

## Description

### FIELD

The present invention relates to a mount for a gooseneck tube. More specifically, the disclosure relates to a mount comprising a base configured for being detachably connected to an instrument clip. The mount comprising a body integrated with the base, and the body comprises a notch configured for accommodating/receiving the gooseneck tube.

### BACKGROUND

A mount for a gooseneck tube may be used by musicians for their music instruments. The mount may be connected to an instrument clip on the instrument. The mount may attach the gooseneck tube, and the gooseneck tube may comprise a microphone in one end of the gooseneck tube. The microphone is for capturing sound from the music instrument. The musicians may wish to adjust the position of the gooseneck tube and thus the microphone relative to the instrument.

Thus, there is a need for an improved mount for a gooseneck tube.

### SUMMARY

Disclosed is a mount for a gooseneck tube. The mount comprising a base configured for being detachably connected to an instrument clip. The mount comprising a body integrated with the base. The body comprises a notch configured for accommodating/receiving the gooseneck tube. The mount comprising a cam lever connected to the body. The cam lever is configured to move between an open position and a closed position. In the open position, the mount allows for insertion and/or retraction of the gooseneck tube in the notch of the body. In the closed position, the mount prevents insertion and/or retraction of the gooseneck tube in the notch of the body.

The mount may be a mounting device, a holder, a clip etc. for mounting or holding a gooseneck tube.

The gooseneck tube or gooseneck tubing or gooseneck cable may comprise an input transducer, such as a microphone, in a first end of the gooseneck tube. The microphone may be configured for capturing sound from a sound source, e.g. a music instrument.

The gooseneck tube may be a semi-rigid, flexible joining element made from a coiled metal hose. It may be configured for bending in any direction and remain in that position. The gooseneck tube may be hollow inside, and the hollow shape of the gooseneck allows electrical cables to be accommodated inside, for example electrical cables for the microphone arranged in the first end of the gooseneck tube.

The gooseneck tube may be rigid and flexible, thereby ensuring that it maintains the position, shape and direction which the user has arranged it in. The gooseneck tube may extend in a longitudinal direction and may have a length of several centimeters, e.g. 10 cm, 15 cm, 20 cm, 25 cm, 30 cm, 35 cm, 40 cm etc. The gooseneck tube may have a circular shape in a transverse direction, and the diameter of the circular cross section may be about 3.5 mm to 6.0 mm, such as about 4.0 mm - 5.5 mm, such as about 4.6 mm - 5.0 mm.

The mount comprises a base configured for being detachably connected to an instrument clip. The base may be shaped to fit into the instrument clip, or the instrument clip may be shaped to fit into the base. The instrument clip may be configured to be attached to the music instrument. Thus, the microphone in the first end of the gooseneck tube is configured to capture the sound from the music instrument, which the base of the mount is connected to via the instrument clip. The base may be made of a rubber material, such as TPU, which provides for mechanical stability and decreases structural noise.

The mount comprises a body integrated with the base. The body may consist of a mix of glass and plastic materials. The advantage of using glass and plastic materials is to provide structural integrity, flexibility and stiffness. The combination of glass and plastic materials ensure not to loose tension even when the mount is in a closed position, where there is tension, for several weeks or months. Therefore the user, e.g. musician, may arrange the mount on the gooseneck tube once and then not move it for long time periods, such as weeks or months.

The body is integrated or connected with the base, i.e. the body may be moulded into the base for ensuring that the body does not separate from the base. The body may be extending outwardly from the base, such as in a perpendicular direction from a plane of the base.

The body of the mount comprises a notch configured for accommodating/receiving the gooseneck tube. The notch may be an opening, hole, space, recess, cavity, depression, and may comprise a rounded shape to match the transversal shape of the gooseneck tube which is configured to be arranged in the notch.

The mount comprises a cam lever connected to the body. The cam lever is configured to move between an open position and a closed position. The cam lever may move in a transversal direction relative to the extension of the gooseneck tube in the notch. The cam lever is configured to be moved by the user.

In the open position, the mount allows for insertion and/or retraction of the gooseneck tube in the notch of the body. The insertion and/or retraction of the gooseneck tube in the notch may be performed by the user, e.g. the musician. Thus, in the open position, the gooseneck tube is movable in the mount. The insertion and/or retraction of the gooseneck tube may be in a transversal direction relative to the extension of the gooseneck tube. In the open position, the cam lever may release a clamping force on the gooseneck tube, e.g. the cam lever may exert minimal force on the gooseneck tube.

In the closed position, the mount prevents insertion and/or retraction of the gooseneck tube in the notch of the body. In the closed position, the body and the cam lever are configured to fix the gooseneck tube in the notch. In the closed position, the cam lever may apply a clamping force on the gooseneck tube, e.g. the cam lever may exert maximum force on the gooseneck tube. Thus, the cam lever may clamp the gooseneck tube when the cam lever is in closed position.

Thus, it is an advantage that the gooseneck tube can be inserted and/or retracted from the notch when cam lever is in the open position. The gooseneck tube may typically be inserted or retracted in the notch in a transversal direction relative to the longitudinal extension of the gooseneck tube. However in the open position, the gooseneck tube may also be configured to move up and down, i.e. move in a longitudinal direction along the longitudinal extension of the gooseneck tube, along the mount. The gooseneck tube may not fall out of the notch in the open position, because there may be a snap fit attachment between the mount and gooseneck tube.

Thus, it is an advantage of the mount that it is possible to adjust the height of microphone relative to the position of the instrument clip, because the gooseneck tube is movable in the notch of the mount, and the mount is attached to the instrument clip, and the microphone is attached to the first end of the gooseneck tube. The instrument clip will typically be attached to the music instrument.

Furthermore, it is an advantage that the adjustment of the height of microphone relative to the position of the instrument clip can be made by the user using only one hand and also without the user having to look at the mount. Thus, the mount is more user-friendly and more easy to use, i.e. to open and close the cam lever, than prior art mounts. Prior art mounts typically compresses rubber onto the gooseneck tube by sliding a solid plastic component over the rubber clip. However, the disadvantage of the prior art mechanism may be that it wears out quickly which results in increased friction of the rubber, and a decrease of the grip. Furthermore, the prior art mechanism may require a lot of force by the user to be operated, and therefore may not allow for adjusting the height of the gooseneck on the instrument.

It is a further advantage of the mount that the base may be made of a rubber material, such as TPU, which provides for mechanical stability and decreases structural noise, which is very relevant for music instruments.

Thus in conclusion, it is an advantage of the mount that is provides quick, easy, and consistent mounting of a gooseneck tube and thereby microphone on the instrument.

Further, it is an advantage of the mount that the cam lever design allows for solid grip by the user while allowing for height adjustment of the microphone on the instrument.

It is a further advantage that the mount allows for one-handed adjustments by the user.

Furthermore, it is an advantage that the mount provides for a locking mechanism by the cam lever to prevent unintentional release of the gooseneck tube.

Yet further, it is an advantage that the mount increases the grip of the gooseneck tube and also provides for diameter tolerance of the gooseneck tube.

According to an aspect, disclosed is a system comprising a mount, a gooseneck tube and an instrument clip. The mount comprises a base configured for being detachably connected to the instrument clip. The mount comprises a body integrated with the base, wherein the body comprises a notch configured for accommodating/receiving the gooseneck tube. The mount comprises a cam lever connected to the body. The cam lever is configured to move between an open position and a closed position, wherein in the open position, the mount allows for insertion and/or retraction of the gooseneck tube in the notch of the body, and wherein in the closed position, the mount prevents insertion and/or retraction of the gooseneck tube in the notch of the body.

In some embodiments, in the open position, the mount is configured for holding the gooseneck tube in a snap fit attachment, when the gooseneck tube is inserted in the mount. Thus, it is an advantage that the mount holds and attaches the gooseneck tube also in the open position, because hereby the gooseneck tube may not fall out of the mount in the open position. Due to the snap fit attachment of the gooseneck tube in the mount, the gooseneck tube can be moved in the mount or inserted/retracted/removed from the mount if forced or moved by the user's hand.

In some embodiments, the open position comprises a fully open position, and a partly open position, and in the partly open position, the cam lever is configured to be pushed to the fully open position by insertion of the gooseneck tube in the notch of the mount. In the closed position, the cam lever may be in angle position of about 0° relative to the plane of the base. In the fully open position, the cam lever may be in angle position of about 90° relative to the plane of the base. In the partly open position, the cam lever may be in angle position of about 1-89° relative to the plane of the base. Thus, it is an advantage that the cam lever is pushed to the fully open position from the partly open position, when the gooseneck tube is inserted into the notch of the mount. Thus, the cam lever need not be fully open when inserting the gooseneck tube, because the cam lever will be pushed open the rest of the way by insertion of the gooseneck tube.

In some embodiments, in the open position, the mount allows for movement of the gooseneck tube in a longitudinal direction of the gooseneck tube in the notch of the body. The movement of the gooseneck tube may be in a longitudinal direction relative to the extension of the gooseneck tube. Thus, in the open position, the gooseneck tube may be configured to move up and down, i.e. move in a longitudinal direction along the longitudinal extension of the gooseneck tube, along the mount. The gooseneck tube may not fall out of the notch in the open position, because there may be a snap fit attachment between the mount and gooseneck tube. Thus, it is an advantage of the mount that it is possible to adjust the height of microphone relative to the position of the instrument clip, because the gooseneck tube is movable in a longitudinal direction in the notch of the mount. In contrast, when the mount is in the closed position, the mount prevents any movement of the gooseneck tube in the mount.

In some embodiments, the body has a first part which extends from the base in a substantially perpendicular direction relative to the base, and wherein the body has a second part which extends from the first part, and is substantially parallel with the base. The first part may extend from the base in a substantially perpendicular direction relative to an x, y plane of the base. The second part may be substantially parallel with an x, y plane of the base. The second part of the body may extend from an end of the first part of the body. The first part and the second part may be arranged substantially 90° relative to each other. The first part and the second part may be substantially perpendicular to each other. The space between the first part and the second part of the body may be the notch of the mount. A transition may be between the first part and the second part. The transition between the first part and the second part may be curved.

In some embodiments, the cam lever is pivotably connected to the body in a first end of the second part. The first end of the second part of the body may be in the opposite end of the second part relative to the connection/transition with the first part. The cam lever may be connected to the body by means of a pin/rod extending through the cam lever and through the body. The pin/rod may be extending through the cam lever and through the first end of the second part of the body. The cam lever may be configured to pivot about the pin/rod.

In some embodiments, the cam lever extends in a longitudinal direction from a first cam lever end to a second cam lever end, where a position of the first cam lever end corresponds to the position of the first end of the second part of the body, and wherein, when the cam lever is in the closed position, the position of the second cam lever end is proximate to the position of a second end of the second part of the body. The first end of the second part of the body may be in the opposite end of the second part relative to the connection/transition with the first part. The second end and the first end of the second part of the body may be opposite to each other along a longitudinal extension of the second part. Thus, the second end of the second part of the body may be at the connection/transition with the first part of the body.

In some embodiments, the second part of the body is curved, and the cam lever has a corresponding curved shape in its longitudinal direction/extension, and when the cam lever is in the closed position, the cam lever is substantially flush/aligned with the second part of the body.

The second part of the body may have an inwardly facing surface towards the notch and the base. The second part of the body may have an outwardly facing surface towards the cam lever and surroundings. The inwardly facing surface of the second part may be substantially parallel with the base. The outwardly facing surface of the second part may be curved.

In some embodiments, the first part of the body is substantially solid, and the second part of the body has a cut-out for accommodating the gooseneck tube and the cam lever, such that the cam lever is substantially flush/aligned with the second part of the body, when the cam lever is in the closed position. It is an advantage that due to the cut-out in the second part of the body, the cam lever can be in contact with the gooseneck tube in the notch of the body, and this provides a clamping mechanism of the gooseneck tube by the cam lever.

In some embodiments, the cam lever has a bend-up in the second cam lever end, which, when the cam lever is in the closed position, protrudes away from the second end of the second part of the body. Thus, the bend-up of the second cam lever end may thereby not be flush but be unaligned with the second end of the second part of the body. It may be an advantage of the bend-up of the cam lever end that it provides for easy handling of the cam lever by the user, because it may be easier for the user to grip the cam lever.

In some embodiments, the cam lever is configured to move in an angle range of about 90°, where the closed position corresponds to about 0°, and where the open position corresponds to a range from about 1°- 90°. When the cam lever is in the closed position, the cam lever is substantially parallel with the second part of the body. When the cam lever is in the fully open position, the cam lever is substantially parallel with the first part of the body.

In some embodiments, the body comprises a stopping element for ensuring that the cam lever is restricted from moving/extending beyond 90°. The stopping element may be a wall. The wall may be parallel with the first part of the body, and the wall may be perpendicular to the second part of the body.

In some embodiments, the body comprises a protrusion configured for contacting and fixating the gooseneck tube, when the gooseneck tube is arranged in the notch and when the cam lever is in the closed position. In the closed position, the protrusion may be an engagement component which engages with the gooseneck tube to thereby fixate the gooseneck tube in the notch, and in the open position, the protrusion disengages from the gooseneck tube to thereby allow for the gooseneck tube to be inserted in or retracted from the notch. The protrusion may be a lip, a tongue, a snapper or the like. The protrusion may be hard and unflexible.

In some embodiments, the protrusion is arranged parallel with the second part of the body, and wherein the cam lever is arranged between the second part of the body and the protrusion. The cam lever may be arranged in an cut-out/opening/hole defined by the second part of the body and the protrusion.

In some embodiments, the cam lever comprises a protruding part, and wherein the protruding part of the cam lever is configured to apply pressure on the protrusion of the body, when the cam lever is in the closed position. The protruding part of the cam lever may be in the first end of the cam lever. In the closed position, the protruding part of the cam lever may engage with the protrusion of the body to thereby fixate the gooseneck tube in the notch, and in the open position, the protruding part of the cam lever may disengage with the protrusion of the body to thereby allow for the gooseneck tube to be inserted in or retracted from the notch. Thus, it is an advantage that the protruding part of the cam lever is configured to apply pressure on the protrusion of the body for thereby for fixating the gooseneck tube in the notch.

In some embodiments, the base of the mount has a substantially square shape in an x, y direction. The x, y direction of the base may correspond to a longitudinal direction and a transversal direction of the mount, and thus the longitudinal extension and the transversal extension of the base may be similar due to the square shape. It is an advantage of the square shape of the base that the mount can be moved by 90° in the instrument clip. Thus, the mount may be rotated 360° in the instrument clip in steps of 90°. It is an advantage that the base and thus the mount thereby provides for embracing and enhancing a new and/or an existing platform design for allowing for microphone rotation to simplify the microphone positioning, when the microphone is arranged in the gooseneck tube, and where the gooseneck tube is arranged in the notch of the mount, and when the mount is arranged in the instrument clip.

In some embodiments, the base has a height in a z-direction, and wherein a recess/groove is provided along/across the height in the z-direction, where the recess/groove is configured to match with a projection in the instrument clip. The z-direction is perpendicular to the x, y directions. Thus, the base may be configured to be pushed into the instrument clip, e.g. from a side, and the recess/groove of the base may match with a corresponding projection in the instruments clip for ensuring correct insertion and optimal fixation of the mount in the instrument clip.

In some embodiments, the base is made of elastic material. The elastic material may be a thermoplastic elastomer, such as thermoplastic polyurethan (TPU), which comprises a mix of rubber and plastic. It is an advantage of e.g. a TPU material that it is flexible, durable, and resistant towards wear from e.g. oils and lubricates. It is a further advantage of the elastic material of the base that the material improve structure-born noise isolation to thereby reduce structure-born noise.

The present invention relates to different aspects including the mount and the system described above and in the following, and corresponding device parts, each yielding one or more of the benefits and advantages described in connection with the first mentioned aspect, and each having one or more embodiments corresponding to the embodiments described in connection with the first mentioned aspect and/or disclosed in the appended claims.

### BRIEF DESCRIPTION OF THE DRAWINGS

The above and other features and advantages will become readily apparent to those skilled in the art by the following detailed description of exemplary embodiments thereof with reference to the attached drawings, in which:
Fig. 1a and 1b schematically illustrate an exemplary mount 2 for a gooseneck tube 4, in perspective view and in a front view.
Fig. 2 schematically illustrate an exemplary system 50 comprising a mount 2, a gooseneck tube 4 and an instrument clip 8.
Fig. 3a and 3b schematically illustrate an exemplary mount 2 in a closed position for a gooseneck tube in a front perspective view and in a back perspective view.
Fig. 4a and 4b schematically illustrate an exemplary mount 2 in an open position for a gooseneck tube in a front perspective view and in a back perspective view.
Fig. 5a, 5b, 5c and 5d schematically illustrate an exemplary mount 2 for a gooseneck tube in side views and cross sectional views.
Fig 6 schematically illustrates an exemplary mount 2 for a gooseneck tube in an exploded view.

### DETAILED DESCRIPTION

Various embodiments are described hereinafter with reference to the figures. Like reference numerals refer to like elements throughout. Like elements will, thus, not be described in detail with respect to the description of each figure. It should also be noted that the figures are only intended to facilitate the description of the embodiments. They are not intended as an exhaustive description of the claimed invention or as a limitation on the scope of the claimed invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

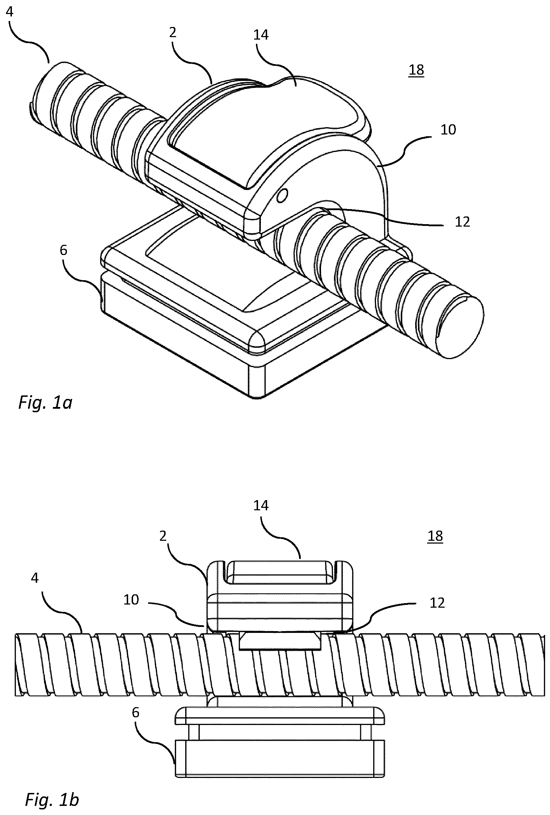

Fig. 1a and 1b schematically illustrate an exemplary mount 2 for a gooseneck tube 4. The mount 2 comprises a base 6 configured for being detachably connected to an instrument clip (not shown). The mount 2 comprises a body 10 integrated with the base 6. The body 10 comprises a notch 12 configured for accommodating/receiving the gooseneck tube 4. The mount 2 comprises a cam lever 14 connected to the body 10. The cam lever 14 is configured to move between an open position (not shown) and a closed position 18 as shown. In the open position, the mount 2 allows for insertion and/or retraction of the gooseneck tube 4 in the notch 12 of the body 10. In the closed position as shown, the mount 2 prevents insertion and/or retraction of the gooseneck tube 4 in the notch 12 of the body 10.

Fig. 1a shows the mount 2 and the gooseneck tube 4 in a perspective view.

Fig. 1b shows the mount 2 and the gooseneck tube 4 in a front view.

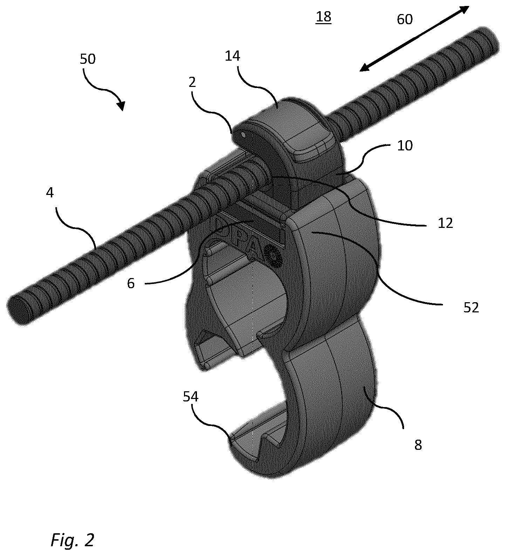

Fig. 2 schematically illustrate an exemplary system 50 comprising a mount 2, a gooseneck tube 4 and an instrument clip 8. The mount 2 comprises a base 6 configured for being detachably connected to an instrument clip 8. The mount 2 comprises a body 10 integrated with the base 6. The body 10 comprises a notch 12 configured for accommodating/receiving the gooseneck tube 4. The mount 2 comprises a cam lever 14 connected to the body 10. The cam lever 14 is configured to move between an open position (not shown) and a closed position as shown. In the closed position as shown, the mount 2 prevents insertion and/or retraction of the gooseneck tube 4 in the notch 12 of the body 10.

In the open position (not shown), the mount 2 is configured for holding the gooseneck tube 4 in a snap fit attachment, when the gooseneck tube is inserted in the mount 2.

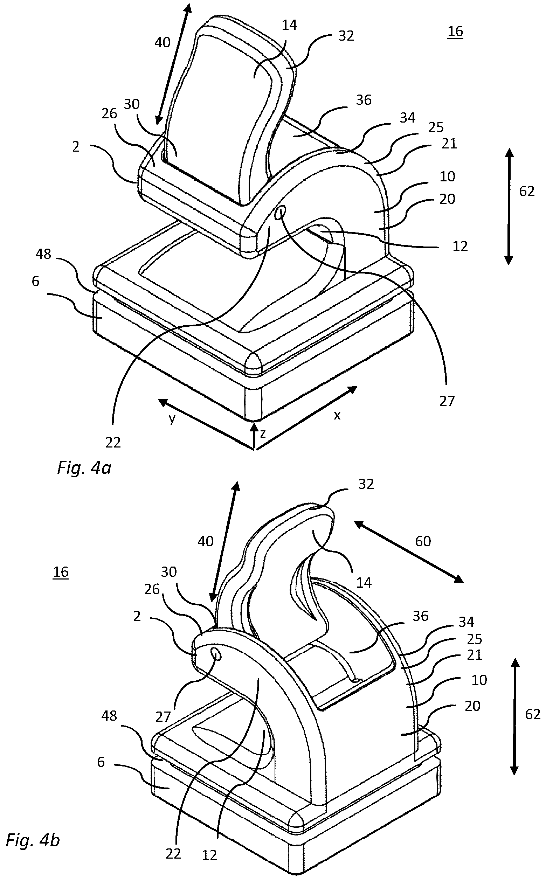

The open position comprises a fully open position as shown in e.g. figs 4a and 4b, and a partly open position (not shown). In the partly open position, the cam lever 14 is configured to be pushed to the fully open position by insertion of the gooseneck tube 4 in the notch 12 of the mount 2. In the closed position 18 as shown, the cam lever 14 is in an angle position of about 0° relative to an x, y plane of the base 6. In the fully open position as shown in e.g. figs 4a and 4b, the cam lever 14 is in an angle position of about 90° relative to the x, y plane of the base 6. In the partly open position (not shown), the cam lever 14 is in angle position of about 1-89° relative to the x, y plane of the base 6.

In the open position as shown in e.g. figs 4a and 4b, the mount 2 allows for movement of the gooseneck tube 4 in a longitudinal direction 60 of the gooseneck tube 4 in the notch 12 of the body 10.

The instrument clip 8 is configured to be attached to a music instrument. In a first end 52 of the instrument clip 8, the mount 2 is attached. In a second end 54 of the instruments clip 8, the instrument clip can be attached to the music instrument, e.g. a drum. If the music instrument is a different instrument than drum, then the second end 54 of the instrument clip 8 may look different such that it is configured to be attached to a different surface shape of the relevant instrument.

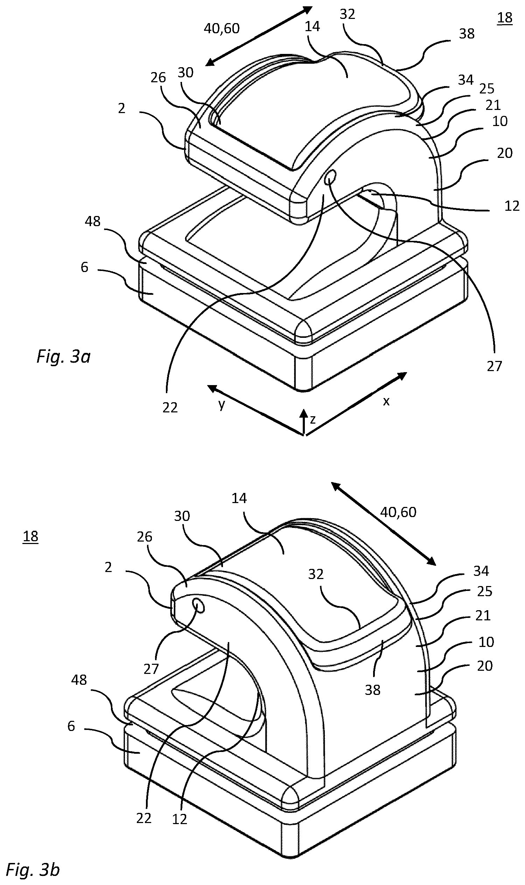

Fig. 3a and 3b schematically illustrate an exemplary mount 2 for a gooseneck tube (not shown in this figure, see figs 1a, 1b and 2). The mount 2 comprises a base 6 configured for being detachably connected to an instrument clip (not shown, see figure 2). The mount 2 comprises a body 10 integrated with the base 6. The body 10 comprises a notch 12 configured for accommodating/receiving the gooseneck tube. The mount 2 comprises a cam lever 14 connected to the body 10. The cam lever 14 is configured to move between an open position (not shown) and a closed position 18 as shown. In the open position, the mount 2 allows for insertion and/or retraction of the gooseneck tube in the notch 12 of the body 10. In the closed position as shown, the mount 2 prevents insertion and/or retraction of the gooseneck tube in the notch 12 of the body 10.

Fig. 3a shows the mount 2 in a front perspective view.

Fig. 3b shows the mount 2 in a back perspective view.

The body 10 has a first part 20 which extends from the base 6 in a substantially perpendicular direction relative to the base 6. The body 10 has a second part 22 which extends from the first part 20, and which is substantially parallel with the base 6.

The second part 22 of the body 10 extends from an end 21 of the first part 20 of the body 10. The first part 20 and the second part 22 of the body 10 may be arranged substantially 90° relative to each other. The first part 20 and the second part 22 of the body 10 may be substantially perpendicular to each other. The space between the first part 20 and the second part 22 of the body 10 is the notch 12 of the mount 2. A transition 25 may be between the first part 20 and the second part 22 of the body 10. The transition 25 between the first part 20 and the second part 22 may be curved.

The cam lever 14 is pivotably connected to the body 10 in a first end 26 of the second part 22. The first end 26 of the second part 22 of the body 10 is in the opposite end of the second part 22 relative to the connection/transition 25 with the first part 20. The cam lever 14 is connected to the body 10 by means of a pin/rod 27 extending through the cam lever 14 and through the first end 26 of the second part 22 of the body 10.

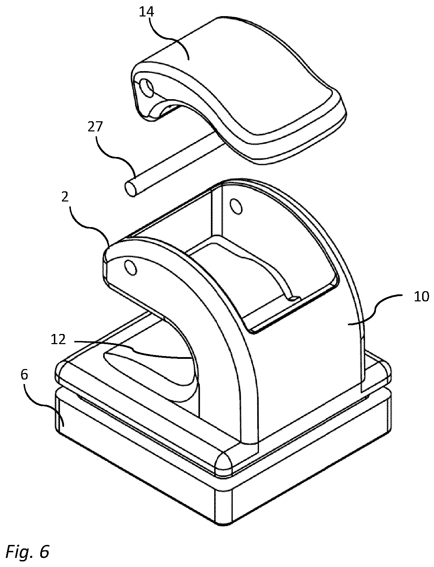

See fig. 6 for an exploded view of the mount 2, the cam lever 14 and the pin/rod 27.

The cam lever 14 extends in a longitudinal direction 40 from a first cam lever end 30 to a second cam lever end 32. A position of the first cam lever end 30 corresponds to the position of the first end 26 of the second part 22 of the body 10. When the cam lever 14 is in the closed position 18 as shown in these figures, the position of the second cam lever end 32 is proximate to the position of a second end 34 of the second part 22 of the body 10.

The first end 26 of the second part 22 of the body 10 is in the opposite end of the second part 22 relative to the connection/transition 25 with the first part 20 of the body 10. The second end 34 and the first end 26 of the second part 22 of the body 10 is opposite to each other along a longitudinal extension 60 of the second part 22. Thus, the second end 34 of the second part 22 of the body 10 may be at the connection/transition 25 with the first part 20 of the body 10. In the closed position as shown in these figures, the longitudinal extension 60 of the second part 22 of the body 10 may correspond/be parallel to the longitudinal direction 40 of the cam lever 14.

The second part 22 of the body 10 may have an inwardly facing surface towards the notch 12 and the base 6, and the second part 22 of the body 10 may have an outwardly facing surface towards the cam lever 14 and surrounding. The inwardly facing surface of the second part 22 may be substantially parallel with the base 6. The outwardly facing surface of the second part 22 may be curved. The cam lever 14 has a corresponding curved shape in its longitudinal direction 40, and when the cam lever 14 is in the closed position 18 as shown, the cam lever 14 is substantially flush/aligned with the second part 22 of the body 10.

The cam lever 14 has a bend-up 38 in the second cam lever end 32, which, when the cam lever 14 is in the closed position 18 as shown, protrudes away from the second end 34 of the second part 22 of the body 10.

The base 6 has a substantially square shape in an x, y direction. The base 6 has a height in a z direction. A recess/groove 48 is provided along/across the height in the z direction, and the recess/groove 48 is configured to match with a projection in the instrument clip. See instrument clip 8 in fig. 2. The base may e.g. have a length of about 4 cm in the x-direction, and a length of about 4 cm in the y-direction, and a height of about 1 cm in the z-direction.

Fig. 4a and 4b schematically illustrate an exemplary mount 2 for a gooseneck tube (not shown in this figure, see figs 1a, 1b and 2). The mount 2 comprises a base 6 configured for being detachably connected to an instrument clip (not shown, see figure 2). The mount 2 comprises a body 10 integrated with the base 6. The body 10 comprises a notch 12 configured for accommodating/receiving the gooseneck tube. The mount 2 comprises a cam lever 14 connected to the body 10. The cam lever 14 is configured to move between an open position 16 as shown and a closed position (not shown). In the open position 16 as shown, the mount 2 allows for insertion and/or retraction of the gooseneck tube in the notch 12 of the body 10. In the closed position, the mount 2 prevents insertion and/or retraction of the gooseneck tube in the notch 12 of the body 10.

Fig. 4a shows the mount 2 in a front perspective view.

Fig. 4b shows the mount 2 in a back perspective view.

In the open position 16 as shown, the mount 2 is configured for holding the gooseneck tube in a snap fit attachment, when the gooseneck tube is inserted in the mount 2.

The open position 16 comprises a fully open position as shown in these figures, and a partly open position (not shown). In the partly open position, the cam lever 14 is configured to be pushed to the fully open position by insertion of the gooseneck tube in the notch 12 of the mount 2. In the closed position, see e.g. figs 3a and 3b, the cam lever 14 is in angle position of about 0° relative to the x, y plane of the base 6. In the fully open position 16 as shown, the cam lever 14 is in angle position of about 90° relative to the x, y plane of the base 6. In the partly open position (not shown), the cam lever 14 is in angle position of about 1-89° relative to the x, y plane of the base 6.

In the open position 16 as shown, the mount 2 allows for movement of the gooseneck tube in a longitudinal direction 60 of the gooseneck tube in the notch 12 of the body 10. See fig. 2 for showing the gooseneck tube 4 in the mount 2 and the longitudinal direction 60 of the gooseneck tube.

The body 10 has a first part 20 which extends from the base 6 in a substantially perpendicular direction relative to the base 6. The body 10 has a second part 22 which extends from the first part 20, and which is substantially parallel with the base 6.

The second part 22 of the body 10 extends from an end 21 of the first part 20 of the body 10. The first part 20 and the second part 22 of the body 10 may be arranged substantially 90° relative to each other. The first part 20 and the second part 22 of the body 10 may be substantially perpendicular to each other. The space between the first part 20 and the second part 22 of the body 10 is the notch 12 of the mount 2. A transition 25 may be between the first part 20 and the second part 22 of the body 10. The transition 25 between the first part 20 and the second part 22 may be curved.

The cam lever 14 is pivotably connected to the body 10 in a first end 26 of the second part 22. The first end 26 of the second part 22 of the body 10 is in the opposite end of the second part 22 relative to the connection/transition 25 with the first part 20. The cam lever 14 is connected to the body 10 by means of a pin/rod 27 extending through the cam lever 14 and through the first end 26 of the second part 22 of the body 10.

See fig. 6 for an exploded view of the mount 2, the cam lever 14 and the pin/rod 27.

The cam lever 14 extends in a longitudinal direction 40 from a first cam lever end 30 to a second cam lever end 32. A position of the first cam lever end 30 corresponds to the position of the first end 26 of the second part 22 of the body 10. When the cam lever 14 is in the open position 16 as shown in these figures, the cam lever 14 extends in a direction perpendicular to the x, y plane of the base 6.

The first end 26 of the second part 22 of the body 10 is in the opposite end of the second part 22 relative to the connection/transition 25 with the first part 20 of the body 10. The second end 34 and the first end 26 of the second part 22 of the body 10 is opposite to each other along a longitudinal extension 60 of the second part 22. Thus, the second end 34 of the second part 22 of the body 10 may be at the connection/transition 25 with the first part 20 of the body 10. In the open position 16 as shown in these figures, the longitudinal extension 60 of the second part 22 of the body 10 may be perpendicular to a longitudinal direction/extension 40 of the cam lever 14.

The first part 20 of the body 10 may be substantially solid. The second part 22 of the body 10 has a cut-out 36 for accommodating the gooseneck tube and the cam lever 14, such that the cam lever 14 is substantially flush/aligned with the second part 22 of the body 10, when the cam lever is in the closed position as shown e.g. in figs 3a and 3b.

The cam lever 14 is configured to move in an angle range of about 90°, where the closed position (as shown in e.g. figs 3a and 3b) corresponds to about 0°, and where the open position 16 as shown in these figures corresponds to a range from about 1°- 90°. When the cam lever 14 is in the fully open position 16 as shown, the cam lever 14 is substantially parallel with the extension/direction 62 of the first part 20 of the body 10.

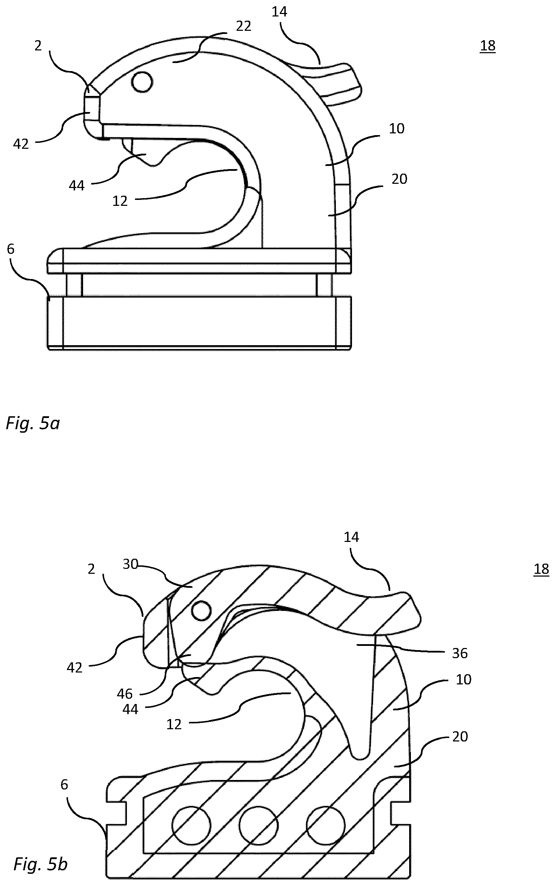

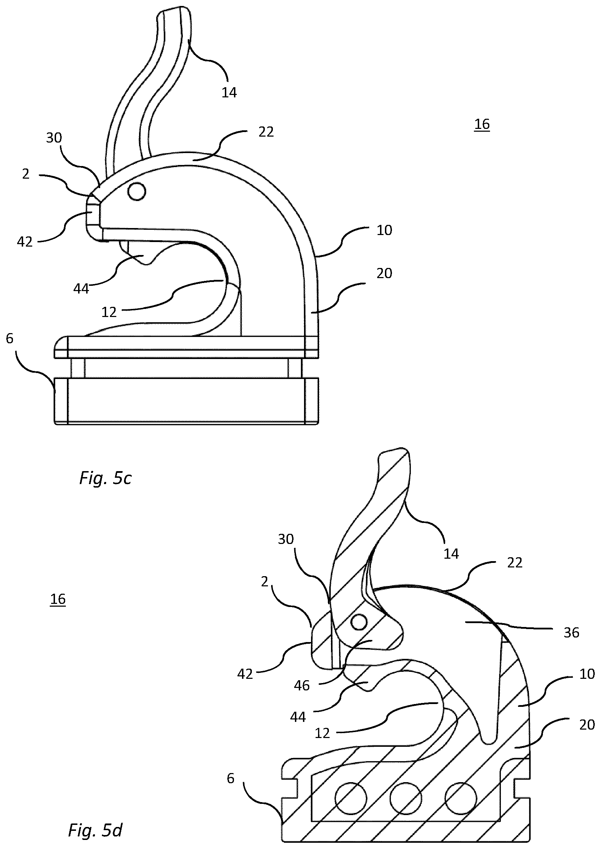

Fig. 5a, 5b, 5c and 5d schematically illustrate an exemplary mount 2 for a gooseneck tube (not shown in this figure, see figs 1a, 1b and 2). The mount 2 comprises a base 6 configured for being detachably connected to an instrument clip (not shown, see figure 2). The mount 2 comprises a body 10 integrated with the base 6. The body 10 comprises a notch 12 configured for accommodating/receiving the gooseneck tube. The mount 2 comprises a cam lever 14 connected to the body 10. The cam lever 14 is configured to move between an open position 16 as shown in fig. 5c and 5d, and a closed position as shown in fig. 5a and 5b. In the open position 16 as shown fig. 5c and 5d, the mount 2 allows for insertion and/or retraction of the gooseneck tube in the notch 12 of the body 10. In the closed position as shown in fig. 5a and 5b, the mount 2 prevents insertion and/or retraction of the gooseneck tube in the notch 12 of the body 10.

Fig. 5a, 5b, 5c and 5d all show a side view. Fig. 5b and 5d furthermore show a cross sectional view.

The body 10 comprises a stopping element 42 for ensuring that the cam lever 14 is restricted from moving/extending beyond 90°. The stopping element 42 may be a wall. The wall may be parallel with the first part 20 of the body 10, and the wall may be perpendicular to the second part 22 of the body 10.

The body 10 comprises a protrusion 44 configured for contacting and fixating the gooseneck tube when the gooseneck tube is arranged in the notch 12 and when the cam lever 14 is in the closed position 18 as shown in shown in fig. 5a and 5b. In the closed position 18 as shown in fig. 5a and 5b, the protrusion 44 may be an engagement component which engages with the gooseneck tube to thereby fixate the gooseneck tube in the notch 12. In the open position 16 as shown in fig. 5c and 5d, the protrusion 44 disengages from the gooseneck tube to thereby allow for the gooseneck tube to be inserted in or retracted from the notch 12.

The protrusion 44 is arranged parallel with the second part 22 of the body 10. The cam lever 14 is arranged between the second part 22 of the body 10 and the protrusion 44. The cam lever 14 may be arranged in a cut-out 36 /opening/hole defined by the second part 22 of the body 10 and the protrusion 44.

The cam lever 14 comprises a protruding part 46. The protruding part 46 of the cam lever 14 is configured to apply pressure on the protrusion 44 of the body 10, when the cam lever is in the closed position 18 as shown in fig. 5a and 5b. The protruding part 46 of the cam lever 14 may be in the first end 30 of the cam lever 14. In the closed position 18 as shown in shown in fig. 5a and 5b, the protruding part 46 of the cam lever 14 may engage with the protrusion 44 of the body 10 to thereby fixate the gooseneck tube in the notch 12. In the open position 16 as shown in fig. 5c and 5d, the protruding part 46 of the cam lever 14 may disengage with the protrusion 44 of the body 10 to thereby allow for the gooseneck tube to be inserted in or retracted from the notch 12.

Fig 6 schematically illustrates an exemplary mount 2 for a gooseneck tube (not shown). The mount 2 comprises a base 6 configured for being detachably connected to an instrument clip (not shown). The mount 2 comprises a body 10 integrated with the base 6. The body 10 comprises a notch 12 configured for accommodating/receiving the gooseneck tube. The mount 2 comprises a cam lever 14 connected to the body 10. The cam lever 14 is configured to move between an open position and a closed position. In the open position, the mount 2 allows for insertion and/or retraction of the gooseneck tube in the notch 12 of the body 10. In the closed position, the mount 2 prevents insertion and/or retraction of the gooseneck tube in the notch 12 of the body 10. The cam lever 14 is connected to the body 10 by means of a pin/rod 27 extending through the cam lever 14 and through the body 10.

Fig. 6 shows the mount 2 and the cam lever 14 and the pin/rod 27 in an exploded view.

Although particular features have been shown and described, it will be understood that they are not intended to limit the claimed invention, and it will be made obvious to those skilled in the art that various changes and modifications may be made without departing from the scope of the claimed invention. The specification and drawings are, accordingly to be regarded in an illustrative rather than restrictive sense. The claimed invention is intended to cover all alternatives, modifications and equivalents.

### ITEMS:

1. A mount (2) for a gooseneck tube (4), the mount (2) comprising:
   - a base (6) configured for being detachably connected to an instrument clip (8);
   - a body (10) integrated with the base (6), wherein the body (10) comprises a notch (12) configured for accommodating/receiving the gooseneck tube;
   - a cam lever (14) connected to the body (10);
   wherein the cam lever is configured to move between an open position (16) and a closed position (18), wherein in the open position, the mount allows for insertion and/or retraction of the gooseneck tube in the notch of the body (10), and wherein in the closed position, the mount prevents insertion and/or retraction of the gooseneck tube in the notch of the body.
2. The mount (2) according to any of the preceding items, wherein in the open position, the mount is configured for holding the gooseneck tube in a snap fit attachment, when the gooseneck tube is inserted in the mount.
3. The mount (2) according to any of the preceding items, wherein the open position comprises a fully open position, and a partly open position, and in the partly open position, the cam lever is configured to be pushed to the fully open position by insertion of the gooseneck tube in the notch of the mount.
4. The mount (2) according to any of the preceding items, wherein in the open position, the mount allows for movement of the gooseneck tube in a longitudinal direction of the gooseneck tube in the notch of the body (10).
5. The mount (2) according to any of the preceding items, wherein the body (10) has a first part (20) which extends from the base (6) in a substantially perpendicular direction relative to the base, and wherein the body (10) has a second part (22) which extends from the first part, and is substantially parallel with the base.
6. The mount (2) according to any of the preceding items, wherein the cam lever (14) is pivotably connected to the body (10) in a first end (26) of the second part (22).
7. The mount (2) according to any of the preceding items, wherein the cam lever (14) extends in a longitudinal direction (40) from a first cam lever end (30) to a second cam lever end (32), where a position of the first cam lever end (30) corresponds to the position of the first end (26) of the second part (22) of the body (10), and wherein, when the cam lever is in the closed position (18), the position of the second cam lever end (32) is proximate to the position of a second end (34) of the second part (22) of the body (10).
8. The mount (2) according to any of the preceding items, wherein the second part (22) of the body (10) is curved, and wherein the cam lever (14) has a corresponding curved shape in its longitudinal direction (14), and when the cam lever is in the closed position (18), the cam lever is substantially flush/aligned with the second part (22) of the body (10).
9. The mount (2) according to any of the preceding items, wherein the first part (20) of the body (10) is substantially solid, and wherein the second part (22) of the body (10) has a cut-out (36) for accommodating the gooseneck tube and the cam lever (14), such that the cam lever is substantially flush/aligned with the second part (22) of the body (10), when the cam lever is in the closed position.
10. The mount (2) according to any of the preceding items, wherein the cam lever (14) has a bend-up (38) in the second cam lever end (32), which, when the cam lever is in the closed position (18), protrudes away from the second end (34) of the second part (22) of the body (10).
11. The mount (2) according to any of the preceding items, wherein the cam lever is configured to move in an angle range of about 90°, where the closed position (18) corresponds to about 0°, and where the open position (16) corresponds to a range from about 1°- 90°.
12. The mount (2) according to any of the preceding items, wherein the body (10) comprises a stopping element (42) for ensuring that the cam lever (14) is restricted from moving/extending beyond 90°, and wherein the stopping element is a wall.
13. The mount (2) according to any of the preceding items, wherein the body (10) comprises a protrusion (44) configured for contacting and fixating the gooseneck tube (4) when the gooseneck tube is arranged in the notch (12) and when the cam lever is in the closed position.
14. The mount (2) according to the preceding item, wherein the protrusion (44) is arranged parallel with the second part (22) of the body (10), and wherein the cam lever (14) is arranged between the second part (22) of the body (10) and the protrusion (44).
15. The mount (2) according to any of the preceding items, wherein the cam lever (14) comprises a protruding part (46), and wherein the protruding part (46) of the cam lever is configured to apply pressure on the protrusion (44) of the body (10), when the cam lever is in the closed position (18).
16. The mount (2) according to any of the preceding items, wherein the base (6) has a substantially square shape in an x, y direction.
17. The mount (2) according to any of the preceding items, wherein the base (6) has a height in a z-direction, and wherein a recess/groove (48) is provided along/across the height in the z-direction, where the recess/groove (48) is configured to match with a projection in the instrument clip.
18. The mount (2) according to any of the preceding items, wherein the base (6) is made of elastic material.
19. A system comprising a mount (2), a gooseneck tube (4) and an instrument clip (8), where the mount (2) comprises:
   - a base (6) configured for being detachably connected to the instrument clip (8);
   - a body (10) integrated with the base (6), wherein the body (10) comprises a notch (12) configured for accommodating/receiving the gooseneck tube;
   - a cam lever (14) connected to the body (10);
   wherein the cam lever is configured to move between an open position (16) and a closed position (18), wherein in the open position, the mount allows for insertion and/or retraction of the gooseneck tube in the notch of the body (10), and wherein in the closed position, the mount prevents insertion and/or retraction of the gooseneck tube in the notch of the body.

### LIST OF REFERENCES

2 mount
4 gooseneck tube
6 base
8 instrument clip
10 body
12 notch
14 cam lever
16 open position
18 closed position
20 first part of body
21 end of the first part of the body
22 second part of body
25 transition
26 first end of the second part of body
27 pin/rod
30 first cam lever end
32 second cam lever end
34 second end of the second part of the body
36 cut-out
38 bend-up of cam lever
40 longitudinal direction of cam lever
42 stopping element of body
44 protrusion of body
46 protruding part of cam lever
48 recess/groove of base
50 system
52 first end of the instrument clip
60 longitudinal direction of gooseneck tube
62 extension/direction of the first part of the body

## Claims

1. A mount (2) for a gooseneck tube (4), the mount (2) comprising:
- a base (6) configured for being detachably connected to an instrument clip (8);
- a body (10) integrated with the base (6), wherein the body (10) comprises a notch (12) configured for accommodating/receiving the gooseneck tube;
- a cam lever (14) connected to the body (10);
wherein the cam lever is configured to move between an open position (16) and a closed position (18), wherein in the open position, the mount allows for insertion and/or retraction of the gooseneck tube in the notch of the body (10), and wherein in the closed position, the mount prevents insertion and/or retraction of the gooseneck tube in the notch of the body.

2. The mount (2) according to any of the preceding claims, wherein in the open position, the mount is configured for holding the gooseneck tube in a snap fit attachment, when the gooseneck tube is inserted in the mount.

3. The mount (2) according to any of the preceding claims, wherein the open position comprises a fully open position, and a partly open position, and in the partly open position, the cam lever is configured to be pushed to the fully open position by insertion of the gooseneck tube in the notch of the mount.

4. The mount (2) according to any of the preceding claims, wherein in the open position, the mount allows for movement of the gooseneck tube in a longitudinal direction of the gooseneck tube in the notch of the body (10).

5. The mount (2) according to any of the preceding claims, wherein the body (10) has a first part (20) which extends from the base (6) in a substantially perpendicular direction relative to the base, and wherein the body (10) has a second part (22) which extends from the first part, and is substantially parallel with the base.

6. The mount (2) according to any of the preceding claims, wherein the cam lever (14) is pivotably connected to the body (10) in a first end (26) of the second part (22).

7. The mount (2) according to any of the preceding claims, wherein the cam lever (14) extends in a longitudinal direction (40) from a first cam lever end (30) to a second cam lever end (32), where a position of the first cam lever end (30) corresponds to the position of the first end (26) of the second part (22) of the body (10), and wherein, when the cam lever is in the closed position (18), the position of the second cam lever end (32) is proximate to the position of a second end (34) of the second part (22) of the body (10).

8. The mount (2) according to any of the preceding claims, wherein the second part (22) of the body (10) is curved, and wherein the cam lever (14) has a corresponding curved shape in its longitudinal direction (14), and when the cam lever is in the closed position (18), the cam lever is substantially flush/aligned with the second part (22) of the body (10).

9. The mount (2) according to any of the preceding claims, wherein the first part (20) of the body (10) is substantially solid, and wherein the second part (22) of the body (10) has a cut-out (36) for accommodating the gooseneck tube and the cam lever (14), such that the cam lever is substantially flush/aligned with the second part (22) of the body (10), when the cam lever is in the closed position.

10. The mount (2) according to any of the preceding claims, wherein the cam lever (14) has a bend-up (38) in the second cam lever end (32), which, when the cam lever is in the closed position (18), protrudes away from the second end (34) of the second part (22) of the body (10).

11. The mount (2) according to any of the preceding claims, wherein the cam lever is configured to move in an angle range of about 90°, where the closed position (18) corresponds to about 0°, and where the open position (16) corresponds to a range from about 1°- 90°.

12. The mount (2) according to any of the preceding claims, wherein the body (10) comprises a stopping element (42) for ensuring that the cam lever (14) is restricted from moving/extending beyond 90°, and wherein the stopping element is a wall.

13. The mount (2) according to any of the preceding claims, wherein the body (10) comprises a protrusion (44) configured for contacting and fixating the gooseneck tube (4) when the gooseneck tube is arranged in the notch (12) and when the cam lever is in the closed position.

14. The mount (2) according to the preceding claim, wherein the protrusion (44) is arranged parallel with the second part (22) of the body (10), and wherein the cam lever (14) is arranged between the second part (22) of the body (10) and the protrusion (44).

15. The mount (2) according to any of the preceding claims, wherein the cam lever (14) comprises a protruding part (46), and wherein the protruding part (46) of the cam lever is configured to apply pressure on the protrusion (44) of the body (10), when the cam lever is in the closed position (18).
